# EUROPEAN PATENT APPLICATION

(11) **EP 2 377 592 A1**
(43) Date of publication of application: **19.10.2011**
(21) Application number: 10160050.0
(22) Date of filing: 15.04.2010
(51) Int. Cl.: B01D 29/52, B01D 29/86

(54) **Method and system for filtering a substance by means of reciprocating filters**

(71) Applicant: Nederlandse Organisatie voor Toegepast -Natuurwetenschappelijk Onderzoek TNO, 2628 VK Delft (NL)
(72) Inventor: The designation of the inventor has not yet been filed
(74) Representative: Hatzmann, Martin

(57) **Abstract**

System for filtering a substance, comprising a plurality of filters (3), means arranged for exposing one surface of each of the filters to the substance (2) to be filtered, driving means arranged for subjecting each of the filters to a reciprocating and/or oscillating motion, and means arranged for draining the filtered substance from the other surface of each of the filters. The driving means (4,5,6;4,8,9) are arranged to subject two or more mutually adjacent filters to mutually different reciprocating and/or oscillating motions. The filters may be driven by an eccentric disc (5) configuration, a crankshaft configuration (5), by linear electromotors (8) or by or pneumatic or hydraulic drive cylinders (8).

## Description

The invention refers to a method for filtering a substance by means of a plurality of filters within a common vessel, the method comprising exposing one surface of each of said filters to the substance to be filtered, subjecting each of said filters to a reciprocating and/or oscillating motion and draining the filtered substance from the other surface of each of said filters.

Such a method is known from e.g. EP0947230, showing a configuration in which a plurality of tubular filters have been mounted in a frame which in use is moved intermittently within a vessel containing a substance to be filtered. Via the interior of the filter tubes the filtered substance is collected and drained.

US4872988 shows a configuration in which a single tubular filter is moved intermittently within a vessel containing a substance to be filtered. Via the interior of the filter tube the filtered substance is drained.

The present invention aims to provide, in a configuration having a plurality of filters within a common vessel, enhanced filtration results compared with the prior art configuration.

According to the invention a method is proposed for filtering a substance by means of a plurality of filters within a common vessel, wherein -contrary to the prior art method- two or more mutually adjacent filters are subjected to mutually different reciprocating and/or oscillating motions.

The invention is based on the understanding that plugging/scaling/(bio)fouling of the filters is reduced when the individual filters, located within the same common vessel, are subjected to reciprocating and/or oscillating motions relative to another, such that adjacent filters experience different reciprocating and/or oscillating motions.

A preferred system for performing the method according to the invention comprises a plurality of filters, means arranged for exposing one surface of each of said filters to the substance to be filtered, driving means arranged for subjecting each of said filters to a reciprocating and/or oscillating motion, and means arranged for draining the filtered substance from the other surface of each of said filters, wherein the driving means are arranged to subject two or more mutually adjacent filters to mutually different reciprocating and/or oscillating motions.

Hereinafter some exemplary embodiments of such system will be discussed with reference to accompanying figure, wherein
- Figure 1: shows a first exemplary embodiment of a preferred system;
- Figure 2: shows a second exemplary embodiment of a preferred system.

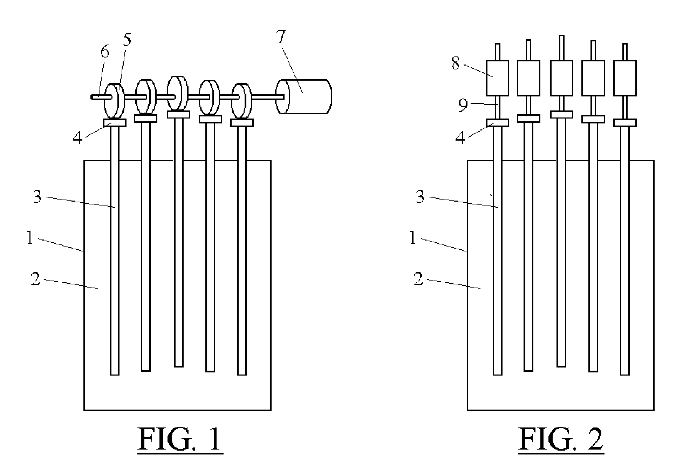

Figure 1 shows a vessel 1 containing e.g. a liquid 2, having a plurality of filters 3. Not explicitly shown are means, e.g. including a feeding pump and connection pipes, for feeding the liquid 2 into the vessel and means, e.g. including a drain pump and connection hoses, for draining the liquid from the inside of the filters 3 outward. Driving means are arranged for subjecting each of the filters to mutually different reciprocating and/or oscillating motions. In figure 1 the driving means are constituted by drive heads 4, eccentric drive discs 5 mounted on a drive shaft 6 which is driven by a drive motor 7. When the drive shaft 6 is rotated by the drive motor 7, the mutually adjacent filter filters 3 are subjected to mutually different reciprocating and/or oscillating motions. Springs may be used to facilitate the oscillating movement and to prestress the contact between drive discs and drive heads. As an alternative, the filters could be driven by means of a crankshaft/connecting rod construction similar to the construction of crankshaft and piston rods etc. in combustion engines, or by a Scottish yoke.

The reciprocating and/or oscillating motions of the filters have directions which are mainly along the main axes (in the case of e.g. tubular filters) and/or main planes (in the case of e.g. flat filters) of the relevant filters.

Figure 2 shows alternative filter driving means, constituted by application of individual drive modules 8, in the form of e.g. linear electromotors or pneumatic or hydraulic drive cylinders. The advantage of such individual drive modules 8 is that they can be individually controlled, e.g. by any drive controller (not shown), due to which the frequency and/or amplitude of the filter motions can be controlled. It may be preferred to vary the motion frequency and/or amplitude; if desired, the motion of the filters can be mutually different.

Moreover a Scottish yoke configuration or a configuration including piezoelectric driving modules may be applied.

Both configurations, shown in figures 1 and 2 respectively, achieve better filtering results compared with the prior art configurations in which the filters are moved collectively, where in the configuration according to the invention (at least part of) the filters are moved individually, i.e. different compared with each other.

## Claims

1. Method for filtering a substance by means of a plurality of filters within a common vessel, comprising:
- exposing one surface of each of said filters to the substance to be filtered;
- subjecting each of said filters to a reciprocating and/or oscillating motion;
- draining the filtered substance from the other surface of each of said filters,
wherein two or more mutually adjacent filters are subjected to mutually different reciprocating and/or oscillating motions.

2. Method according to claim 1, wherein said reciprocating and/or oscillating motions have directions mainly along the main axes and/or main planes of the relevant filters.

3. System for filtering a substance, comprising a plurality of filters (3), means arranged for exposing one surface of each of said filters to the substance (2) to be filtered, driving means arranged for subjecting each of said filters to a reciprocating and/or oscillating motion, and means arranged for draining the filtered substance from the other surface of each of said filters, wherein the driving means (4,5,6;4,8,9) are arranged to subject two or more mutually adjacent filters to mutually different reciprocating and/or oscillating motions.

4. System according to claim 3, wherein the filters are driven by an eccentric disc (5) configuration.

5. System according to claim 3, wherein the filters are driven by a crankshaft configuration.

6. System according to claim 3, wherein the filters are driven by a Scottish yoke configuration.

7. System according to claim 3, wherein the filters are driven by linear electromotors (8).

8. System according to claim 3, wherein the filters are driven by la piezoelectric configuration.

9. System according to claim 3, wherein the filters are driven by pneumatic or hydraulic drive cylinders (8).
